# NEUE EUROPÄISCHE PATENTSCHRIFT

(11) **EP 2 367 772 B2**
(45) Veröffentlichungstag und Bekanntmachung des Hinweises auf die Entscheidung über den Einspruch: **30.09.2015**
(45) Hinweis auf die Patenterteilung: 24.10.2012
(21) Anmeldenummer: 09799603.7
(22) Anmeldetag: 15.12.2009
(51) Int. Cl.: C04B 28/08

(54) **SÄURERESISTENTE, HYDRAULISCH ABBINDENDE MASSEN**
ACID-RESISTANT, HYDRAULICALLY SETTING MASSES
MATIÈRES À PRISE HYDRAULIQUE, RÉSISTANTES AUX ACIDES

(30) Priorität: 22.12.2008 DE 102008055064
(43) Veröffentlichungstag der Anmeldung: 28.09.2011
(73) Patentinhaber: Wacker Chemie AG, 81737 München (DE)
(72) Erfinder: ZEH, Harald, 84489 Burghausen (DE); BEZLER, Jürgen, 84489 Burghausen (DE); BONIMEIER, Stefan, 84518 Garching (DE); HOFFMANN, Armin, 84524 Neuötting (DE); LUTZ, Hermann, 84547 Emmerting (DE)
(74) Vertreter: Schuderer, Michael
(86) Internationale Anmeldenummer: PCT/EP2009/067163
(87) Internationale Veröffentlichungsnummer: WO 2010/072618

(56) Entgegenhaltungen:
- EP-A2- 2 085 367
- JP-A- 2003 020 260
- JP-A- 2003 089 565
- JP-A- 2005 324 996
- JP-A- 2007 001 802
- US-A1- 2004 019 141
- DENKI KAGAKU KOGYO K. K.: "Polymer-cement mixtures for mortar and concrete" CHEMICAL ABSTRACTS, CHEMICAL ABSTRACTS SERVICE (C A S), US, Bd. 116, Nr. 18, 4. Mai 1992 (1992-05-04), XP000286271 ISSN: 0009-2258
- DENKI KAGAKU KOGYO K. K.: "Chemical-resistant binders" CHEMICAL ABSTRACTS, Bd. 101, Nr. 4, 23. Juli 1984 (1984-07-23) , Seite 241, XP000184662 ISSN: 0009-2258
- P. C. HEWLETT: 'Lea's Chemistry of Cement and Concrete', Bd. 5, 1998, ARNOLD, LONDON - SYDNEY - AUCKLAND Seite 33
- Wikipedia "Opus caementitium" http://de.wikipedia.org/wiki/Opus_Caementit ium, printed on 19.12.2013

## Beschreibung

Die Erfindung betrifft säureresistente, hydraulisch abbindende Massen, Verfahren zu deren Herstellung sowie deren Anwendung.

Während die Metallkorrision in Abwasseranlagen schon lange Beachtung gefunden hat, ist die Bedeutung der Korrosion an Beton oder Mörteln erst in den letzten Jahren ins Blickfeld gekommen. Korrosionsschäden, insbesondere durch mikrobielle Stoffwechselprozesse von Schwefelverbindungen bedingte Korrosionsschäden, werden zu den häufiger auftretenden Schadensarten bei Abwasserkanälen gezählt; dazu kommen Schäden bei Pumpwerken und in Abwasserreinigungsanlagen (Klärwerken). Die korrosive Zerstörung von Beton- oder Mörteloberflächen durch biologisch gebildete (biogene) Schwefelsäure wird auch in Biogasanlagen beobachtet. Die Schwefelsäure wird durch im aeroben Bereich von Abwasseranalgen oder Biogasanlagen lebende Bakterien des Typus Thiobacillus als Stoffwechselendprodukt gebildet. Von der Schwefelsäure werden der Zementstein und kalkhaltige Zuschläge angegriffen (lösender und treibender Angriff). Die Auswirkungen sind erheblich: Die Korrosionsgeschwindigkeit wird je nach Bedingungen mit 6 bis 10 mm/Jahr angegeben. Als Ergebnis zeigt sich eine typische Waschbetonoberfläche des geschädigten Betons (Freilegung der Gesteinskörnung).

Aus dem Stand der Technik ist bekannt, die Säureresistenz von Beton durch Kombination von Zementen mit puzzolanischen Zusätzen zu verbessern: Die JP 2002160960 A2 beschreibt eine hydraulisch abbindende Zusammensetzung aus Aluminatzement mit puzzolanischen Zusätzen wie Flugasche. Aus der JP 2003055019 A2 sind Zusammensetzungen aus Zement und einem feinen puzzolanischen Pulver beschrieben. Die JP 2006327868 A2 beschreibt Zusammensetzungen aus Aluminatzement, Hüttensand und einem schwindmaßreduzierendem Zusatz. Gegenstand derJP 2006-225221 A2 sind Mörtelzusammensetzunegn mit Calciumalüminatzement, Puzzolane und nicht eisenhaltigem Hüttensand, gegebenfalls noch mit Polymerdispersion oder Faservermischt. In der JP 2006/044958 A2 wird ein säureresistenter Mörtel aus Aluminatzement, Hüttensand, Polymerdispersion und schwundmaßreduzierendem Zusatz beschrieben. Aus der KR 20040089995 A ist eine Mörtelzusammensetzung bekannt mit Portlandzement, Hüttensand, einem weiteren anorganischen Bindemittel, Acrylat- oder Styrolbutadien-Polymer. Gegenstand der EP 1614670 A2 sind zementäre Mörtelsysteme auf Basis Portlandzementklinker, Calciumaluminatzement sowie Zusatzstoffe aus der Gruppe der Puzzolane oder latent hydraulischen Stoffen. Eine ähnliche Zusammensetzung beschreibt die JP 2007001802 A2 mit Portlandzement, Puzzolan, latent hydraulischem Bindemittel wie Hüttensand, wobei gegebenenfalls noch Polymerdispersion, wasserlösliches Polymer oder Blähtom hinzugefügt werden kann.

Diese Systeme zeigen zwar aufgrund des Zementanteils ein schnelles Abbindeverhalten, die Säureresistenz kann aber noch nicht zufriedenstellen.

Es bestand daher die Aufgabe, Zusammensetzungen für säureresistente, hydraulisch abbindende Massen zur Verfügung zu stellen, welche hohe Säureresistenz aufweisen und auch über hervorragende mechanische Beständigkeit verfügen.

Es wurde gefunden, dass sich die Aufgabe mit einer Bindemittel-Kombination aus Hüttensand und Polymeranteil lösen läßt, welcher noch Puzzolane, und gegebenenfalls geringe Anteile herkömmlicher Zemente zugegeben werden können.

Gegenstand der Erfindung sind säureresistente, hydraulisch abbindende Massen auf der Basis von
a) 20-25 Gew.-% Hüttensand,
b) 0,5 - 30 Ges.-% ein oder mehrere Puzzolane,
c) 40-80 Gew.-% ein oder mehrere Füllstoffe,
d) 0,5-10 Gew.-% von einem oder mehreren Polymerisaten auf der Basis von ethylenisch ungesättigten Monomeren,
sowie Wasser, jeweils bezogen auf das Gesamttrockengewicht der Massen.

Hüttensand oder Schlackensand wird durch Granulation von Hochofenschlacke erhalten. Hüttensand besteht im Allgemeinen aus 30 bis 45 Gew.-% CaO, 30 bis 45 Gew.-% SiO₂, 5 bis 15 Gew.-% Al₂O₃, 4 bis 17 Gew.-% MgO, 0,5 bis 1 Gew.-% und Spuren anderer Elemente. Die Zusammensetzung variiert in Abhängigkeit von den Einsatzstoffen des Hochofens. Geeignete Hüttensande sind kommerziell erhältlich, beispielsweise unter der Bezeichnung Slagstar^{R} von Baumit oder Merit 5000 von SSAB Merox. Im Allgemeinen enthalten die säureresistenten, hydraulisch abbindenden Massen 20 bis 25 Gew.-% der Komponente a), bezogen auf das Gesamttrockengewicht der Massen.

Puzzolane b) sind kieselsäurehaltige oder kieselsäure- und tonerdehaltige, natürliche oder künstliche Stoffe. Man unterscheidet zwischen natürlichen und künstlichen Puzzolanen. Zu den natürlichen Puzzolanen zählen glasreiche Aschen und Gesteine vulkanischen Ursprungs, beispielsweise Bims (Bimsstein), Trass (feingemahlener Tuffstein), Santorinerde, Kieselgur, Hornsteine (Kieselgesteine), Kieselschiefer und Molererde. Künstliche Puzzolane sind gebrannter, gemahlener Ton (Ziegelmehl), Flugaschen wie Steinkohle-Kraftwerksasche, Silicastaub, Ölschieferasche (Ölschiefer = bituminöser, kalkhaltiger Schiefer), sowie calziniertes Kaolin (Metakaolin). Bevorzugt werden die künstlichen Puzzolane, besonders bevorzugt Flugasche oder Silicastaub. Die Einsatzmenge beträgt 0,5 bis 30 Gew.-%, vorzugsweise 0,5 bis 20 Gew.-%, jeweils bezogen auf das Gesamttrockengewicht der Massen.

Beispiele für geeignete Füllstoffe c) sind Quarzsand, Quarzmehl, Calciumcarbonat, Dolomit, Aluminiumsilicate, Ton, Kreide, Weißkalkhydrat, Talkum oder Glimmer, oder auch Leichtfüllstoffe wie Bims, Schaumglas, Gasbeton, Perlite, Vermiculite, Carbo-Nano-Tubes (CNT). Es können auch beliebige Gemische der genannten Füllstoffe eingesetzt werden. Bevorzugt werden Quarzsand und Quarzmehl. Im Allgemeinen enthalten die säureresistenten, hydraulisch abbindenden Massen 40 bis 80 Gew.-%, Füllstoffe, bezogen auf das Gesamttrockengewicht der Massen.

Geeignete Polymerisate d) sind Homo- und Mischpolymerisate von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 13 C-Atomen, beispielsweise VeoVa9^{®} öder VeoVa10^{®} (Handelsnamen der Firma Resolution). Besonders bevorzugt ist Vinylacetat. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat. Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Bevorzugt sind Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und (Meth)Acrylsäureester, Mischpolymerisate von Vinylacetat mit Ethylen und Vinylchlorid, Vinylchlorid-Ethylen-Mischpolymerisate, (Meth)acrylsäureester-Polymerisate, Styrol-Acrylsäureester-Copolymerisate, Styrol-1,3-Butadien-Copolymerisate.

Besonders bevorzugt werden Copolymerisate von Vinylacetat mit 1 bis 40 Gew.-% Ethylen;
Mischpolymerisate von 30 bis 90 Gew.-% Vinylacetat mit 1 bis 40 Gew.-% Ethylen und 5 bis 50 .Gew.-% von einem oder mehreren weiteren Comonomeren aus der Gruppe Vinylester mit 1 bis 15 C-Atomen im Carbonsäurerest wie Vinylpropionat, Vinyldodecanoat, Vinylester von alpha-verzweigten Carbonsäuren mit 9 bis 13 C-Atomen wie VeoVa9^{®}, VeoVal10^{®}, VeoVall^{®};
Mischpolymerisate von 30 bis 90 Gew.-% Vinylacetat, 1 bis 40 Gew.-% Ethylen und vorzugsweise 5 bis 60 Gew.-% (Meth)Acrylsäureester von unverzweigten oder verzweigten Alkoholen mit 1 bis 15 C-Atomen, insbesonders Methylmethacrylat, n-Butylacrylat oder 2-Ethylhexylacrylat;
Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 5 bis 30 Gew.-% (Meth)Acrylsäureester von unverzweigten oder verzweigten Alkoholen mit 1 bis 15 C-Atomen, insbesonders Methylmethacrylat, n-Butylacrylat oder 2-Ethylhexylacrylat, welche noch 5 bis 40 Gew.-% Ethylen enthalten;
Mischpolymerisate mit Vinylacetat, 10 bis 40 Gew.-% Ethylen und 1 bis 60 Gew.-% Vinylchlorid;
wobei sich die Angaben in Gew.-% auf jeweils 100 Gew.-% aufaddieren.

Besonders bevorzugt werden auch (Meth)Acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat; 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; sowie Vinylchlorid-Ethylen-Polymerisate mit 5 bis 30 Gew.-% Ethylen; wobei sich die Angaben in Gew.-% auf jeweils 100 Gew.-% aufaddieren.

Gegebenenfalls können die Polymerisate noch 0,1 bis 5 Gew.-%, bezogen auf das Gesamtgewicht des Polymerisats, Hilfsmonomereinheiten enthalten. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulforisäuren bzw. deren Salze, vorzugsweise Vinylsulfonsäure, 2-Acrylamido-2-methyl-propansulfonsäure. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyl-tri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können.

Die Monomerauswahl bzw. die Auswahl der Gewichtsanteile der Comonomere erfolgt dabei so, dass im allgemeinen eine Glasübergangstemperatur Tg von -50°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Bevorzugt werden auch hydrophob modifizierte Polymerisate. Geeignete Hydrophobierungsmittel, welche im Gemisch mit den genannten Polymerisaten eingesetzt werden können, sind Organosiliciumverbindungen und/oder Fettsäure(derivate).

Geeignete Organosiliciumverbindungen sind Kieselsäureester Si(OR')4, Silane wie Tetraorganosilane SiR₄ und Organoorganoxysilane SiRₙ(OR')₄-ₙ mit n = 1 bis 3, Polysilane mit vorzugsweise der allgemeinen Formel R₃Si(SiR₂)ₙSiR₃ mit n = 0 bis 500, Organosilanole SiRₙ(OH)₄₋ₙ, Di-, Oligo- und Polsiloxane aus Einheiten der allgemeinen Formel R_{c}H_{d}Si(OR')ₑ(OH)_{f}O(_{4-c-d-e-f})_{/2} mit c = 0 bis 3, d = 0 bis 1, e = 0 bis 3, f = 0 bis 3 und wobei die Summe c+d+e+f je Einheit höchstens 3.5 ist, wobei jeweils R gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, vorzugsweise Methyl und Methyl bedeutet, wobei die Reste R und R' auch mit Halogenen wie Cl, mit Ether-, Thioether-, Ester-, Amid-, Nitril-, Hydroxyl-, Amin-, Carboxyl-, Sulfonsäure-, Carbonsäureanhydrid- und Carbonyl-Gruppen substituiert sein können, und wobei im Fall der Polysilane R auch die Bedeutung OR' haben kann.

Bevorzugt werden die Organoorganoxysilane SiRₙ(OR')₄₋ₙ mit n = 1 bis 3, insbesondere Isooctyltriethoxysilan, n-Octyltriethoxysilan, Hexadecyltriethoxysilan.

Die Herstellung der genannten Organosiliciumverbindungen kann nach Verfahren erfolgen wie sie in Noll, Chemie und Technologie der Silicone, 2. Auflage 1968, Weinheim, und in Houben-Weyl, Methoden der organischen Chemie, Band E20, Georg Thieme Verlag, Stuttgart (1987) beschrieben sind.

Zur Hydrophobierung geeignet sind auch Fettsäuren und Fettsäurederivate, die unter alkalischen Bedingungen, vorzugsweise pH > 8, Fettsäure bzw. das entsprechende Fettsäureanion freisetzen. Bevorzugt werden Fettsäureverbindungen aus der Gruppe der Fettsäuren mit 8 bis 22 C-Atomen, deren Anhydride, deren Metallseifen, deren Amide, sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden.

Geeignete Fettsäuren sind verzweigte und unverzweigte, gesättigte und ungesättigte Fettsäuren mit jeweils 8 bis 22 C-Atomen. Beispiele sind Laurinsäure (n-Dodecansäure), Myristinsäure (n-Tetradecansäure), Palmitinsäure (n-Hexadecansäure), Stearinsäure (n-Octadecansäure) sowie Ölsäure (9-Dodecensäure). Ein Beispiel für Fettsäureanhydrid ist Laurinsäureanhydrid.

Geeignete Metallseifen sind die der obengenannten Fettsäuren mit Metallen der 1. bis 3. Hauptgruppe bzw. 2. Nebengruppe des PSE, sowie mit Ammoniumverbindungen NX₄⁺, wobei X gleich oder verschieden ist und für H, C₁- bis C₈-Alkylrest und C₁- bis C₈-Hydroxyalkylrest steht. Bevorzugt werden Metallseifen mit Lithium, Natrium, Kalium, Magnesium, Calcium, Aluminium, Zink, und den Ammoniumverbindungen.

Geeignete Fettsäureamide sind die mit Mono- oder Diethanolamin und den obengenannten C₈- bis C₂₂-Fettsäuren erhältlichen Fettsäureamide.

Geeignete Fettsäureester sind die C₁- bis C₁₄-Alkylester und - Alkylarylester der genannten C₈- bis C₂₂-Fettsäuren, vorzugsweise Methyl-, Ethyl-, Propyl-, Butyl-, Ethylhexyl-Ester sowie die Benzylester.
Geeignete Fettsäureester sind auch die Mono-, Di- und Polyglykolester der C₈- bis C₂₂-Fettsäuren.
Weitere geeignete Fettsäureester sind die Mono- und Diester von Polyglykolen und/oder Polyalkylenglykolen mit bis zu 20 Oxyalkylen-Einheiten, wie Polyethylenglykol und Polypropylenglykol.
Geeignet sind auch die Mono-, Di- und Tri-Fettsäureester des Glycerins mit den genannten C₈- bis C₂₂-Fettsäuren, sowie die Mono-, Di- und Tri-Fettsäureester von Mono-, Di- und Triethanolamin mit den genannten C₈- bis C₂₂-Fettsäuren.
Geeignet sind auch die Fettsäureester von Sorbit und Mannit.

Die Hydrophobierungsmittel zur Modifizierung der Polymerisate d) werden im Allgemeinen in einer Menge von 1 bis 20 Gew.-%, bezogen auf das Polymerisat d) eingesetzt.

Besonders bevorzugt werden auch Kombinationen von Polymerisaten, welche nicht hydrophob modifiziert sind, mit hydrophob modifizierten Polymerisaten. Das Gewichtsverhältnis beträgt im Allgemeinen von 1 : 10 bis 10 :1.

Die Polymerisate d) können in Form deren wässrigen Dispersionen oder als in Wasser redispergierbares Polymerpulver eingesetzt werden. Bevorzugt wird der Einsatz als in Wasser redispergierbares Polymerpulver. Die Herstellung der Polymerisate in Form deren wässrigen Dispersionen oder in Wasser redispergierbaren Pulver erfolgt in wässrigem Medium und bevorzugt nach dem Emulsionspolymerisationsverfahren. Die Polymerisate fallen dabei in Form von wässrigen Dispersionen an und können gegebenenfalls nach gängigen Trocknungsverfahren zu entsprechenden in Wasser redispergierbaren Pulver (Dispersionspulver) überführt werden. Zum Erhalt der hydrophob modifizierten Polymerisate werden die Hydrophobierungsmittel vorzugsweise nach Beendigung der Polymerisation der Polymerdispersion zugegeben und diese gegebenfalls getrocknet. Verfahren zur Herstellung von Polymerdispersionen bzw. Dispersionspulvern sind dem Fachmann bekannt und beispielsweise in der WO 2004/092094 A1 beschrieben, deren diesbezügliche Angaben Teil der Anmeldung sind (incorporated here by reference).

Der Polymerisatanteil d) in säureresistenten, hydraulisch abbindenden Massen beträgt im Allgemeinen 0,5 bis 10 Gew.-%, bezogen auf das Gesamttrockengewicht der Massen. Bei Einsatz des Polymerisats in Form einer wässrigen Dispersion bemisst sich der Anteil am Trockengewicht des Polymerisats.

Gegebenenfalls kann die Zusammensetzung noch einen geringen Anteil an herkömmlichen Zementen enthalten. Beispielsweise Normalzement DIN EN 197-1, wie Portlandzement CEM I - CEM V, Hochofenzement CEM III, enthalten. Der Anteil bemisst sich vorzugsweise auf 0 bis kleiner 20 Gew.-%, besonders bevorzugt 0 bis 10 Gew.-%, jeweils bezogen auf das Gesamttrockengewicht der Massen. Am meisten bevorzugt ist neben dem Hüttensand a) kein herkömmlicher Zement enthalten.

Zur Herstellung von verarbeitungsfertigen Massen werden die Bestandteile a) bis d) mit Wasser abgemischt. Die dazu erforderliche Wassermenge beträgt im Allgemeinen 10 bis 40 Gew.-%, vorzugsweise 10 bis 20 Gew.-%, jeweils bezogen auf das Gesamttrockengewicht der säureresistenten, hydraulisch abbindenden Massen.

Die Herstellung ist an keine spezielle Vorgehensweise oder Mischvorrichtung gebunden und kann beispielsweise in einem Betonmischer oder einem Fertigbetonmischwerk erfolgen. Die säureresistenten, hydraulisch Massen können fertig gemischt als Trockenmörtelzusammensetzung an die Baustelle geliefert werden. Aus den Bestandteilen der Rezeptur können auch erst auf der Baustelle Mischungen hergestellt werden und durch Zugabe von Wasser zu hydraulisch abbindenden Massen umgesetzt werden.

Die damit erhaltenen Mörtel eignen sich zur Beschichtung von Bauwerken, insbesondere im Sielbau, zur Herstellung von säureresistenten Oberflächen. Der Mörtel eignet sich auch als Fugenmörtel, beispielsweise zur Verfugung von Ziegelmauerwerk in Abwasserkanälen. Ein weiteres Einsatzgebiet ist das als Reparaturmörtel, insbesondere für säurebelastete Flächen. Der Mörtel eignet sich auch als Klebemittel, beispielsweise zur Verklebung von Fliesen und Platten im Abwasserbereich.

Die nachfolgenden Beispiele dienen der weiteren Erläuterung der Erfindung:

### Basisrezeptur:

| | | | |
|---|---|---|---|
| 225 | Gew.-Teile | Hüttensand | (Slagstar 42,4 N) |
| 100 | Gew.-Teile | Flugasche | (EFA-Füller) |
| 15 | Gew.-Teile | Silicastaub | (Elkem Micro-Silica 940 U-H) |
| 246 | Gew.-Teile | Quarzsand | (AKW HR 0,7-1,2T, Nr. 5) |
| 366 | Gew.-Teile | Quarzsand | (AKW HR 0,3-0,8T, Nr. 7) |
| 2,5 | Gew.-Teile | Entschäumer | (Agitan P 800) |
| X | Gew.-Teile | Polymerisat | |

Es wurden die nachfolgend angegebenen Polymerisate, in Form deren in Wasser redispergierbaren Polymerpulver, in den dort angegebenen Mengen, der Basisrezeptur zugesetzt.

Die Basisrezeptur (BR) wurde mit 120 Gew.-Teilen bis 170 Gew.-Teilen Wasser angerührt, sodass ein Mörtel mit einem Ausbreitmaß (ohne Hubschläge) gemäß DIN 18555 / EN 1015 von 10 cm resultierte.

### Vergleichsrezeptur:

Mit der Vergleichsrezeptur (VR) wurde analog der Basisrezeptur vorgegangen, mit dem Unterschied, dass anstelle des Hüttensandes die gleiche Menge an Portlandzement CEM I 52,5T eingesetzt worden ist.

### Anwendungstechnische Prüfung:

Aus den Mörtelmassen wurden jeweils Prismen mit den Maßen 4 cm x 4 cm x 8 cm hergestellt und 14 Tage unter Normbedingungen (23°C, 50 % relative Luftfeuchte) gelagert.

Die Prüfung auf Beständigkeit gegenüber Schwefelsäure wurde gemäß der Hamburger Sielbaurichtlinie durchgeführt (Franke et al, Prüfrichtlihie für Mörtel im Sielbau, Tiefbau-Ingenieurbau, Straßenbau (TIS), 4/97).

Es wurden pro Ansatz 5 Prüfkörper (Prismen) eingesetzt.

Die Prüfkörper wurden jeweils 14 Tage in Wasser gelagert (Wasserlagerung, Referenz) und danach 14 Tage bei pH=0 gelagert (Säurelagerung).

Der pH-Wert wurde täglich kontrolliert und gegebenenfalls mittels Nachtitration konstant gehalten. Die wässrige Phase wurde während der Testung nicht gewechselt. Nach Ablauf der Lagerzeiten wurden alle losen Bestandteile von den Prüfkörpern abgelöst und diese mit Wasser gewaschen.

Es wurde das Gewicht der Prismen nach der Wasserlagerung (mw) und nach der Säurelagerung (ms) bestimmt. Je größer die Gewichtsabnahme Δm zwischen Wasserlagerung und Säurelagerung, um so mehr Material wurde korrosiv abgetragen. Ein positives Δm zeigt an, dass der Prüfkörper unbeschädigt ist. Der Gewichtsanstieg ist auf die Nachhydratation des unbeschädigten Prüfkörpers zurückzuführen.

Folgende Polymerisate wurden getestet:
Polymerisat P1:
   Vinylacetat-Ethylen-Copolymer mit Tg = -7°C (Vinnapas 5044N)
Polymerisat P2:
   Vinylchlorid-Ethylen-Copolymer (Vinnapas V 8062)
Polymerisat P3:
   Mischung von 47 Gew.-Teilen Polymerisat P1 und 3 Gew.-Teilen eines mit Silan hydrophob modifizierten Vinylchlorid-EthylenCopolymers (Vinnapas A 7172)
Polymerisat P4:
   Styrol-Acrylat-Copolymer mit Tg = +20°C (Vinnapas 2012N)

Die Testergebnisse in der Tabelle zeigen, dass mit den erfindungsgemäßen Massen die Korrosion wirksam unterbunden wird (positives Δm), während bei den Vergleichsmassen (ohne Pulver = Vergleichsbeispiel 1, ohne Pulver und ohne Hüttensand = Vergleichsbeispiel 2) das Gewicht der Probekörper, bedingt durch Betonkorrosion, abnimmt.

**Tabelle:**

| Beispiel | Rezeptur | Polymerisat | Menge Gew.% | mw [g] | ms [g] | Δm [g] |
|---|---|---|---|---|---|---|
| Vbsp.1 | BR (1) | - | - | 246,5 | 244,8 | -1,7 |
| Vbsp.2 | VR (2) | - | - | 261,8 | 128,1 | -133,7 |
| Bsp.1 | BR (3a) | P1 | 1 | 240,1 | 266,5 | +26,4 |
| Bsp.2 | BR (3b) | P1 | 5 | 238,6 | 258,5 | +19,9 |
| Bsp.3 | BR (7b) | P2 | 5 | 232,5 | 252,8 | +20,3 |
| Bsp.4 | BR (I) | P3 | 5 | 248,0 | 258,2 | +10,2 |
| Bsp.5 | BR (5a) | P4 | 5 | 242,1 | 255,0 | +12,9 |

## Patentansprüche

1. Säureresistente, hydraulisch abbindende Massen auf der Basis von
a) **20 - 25 Gew. -%** Hüttensand,
b) **0,5 -30 Gew.-%** ein oder mehrere Puzzolane,
c) **40 - 80 Gew. -%** ein oder mehrere Füllstoffe,
d) **0,5 - 10 Gew.-% von** einem oder mehreren Polymerisaten auf der Basis von ethylenisch ungesättigten Monomeren,
sowie Wasser, **jeweils bezogen auf das Gesamttrockengewicht der Massen.**

2. Massen nach Anspruch 1, **dadurch gekennzeichnet, dass** als Polymerisate d) ein oder mehrere enthalten sind aus der Gruppe umfassend Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und (Meth)Acrylsäureester, Mischpolymerisate von Vinylacetat mit Ethylen und Vinylchlorid, Vinylchlorid-Ethylen-Mischpolymerisate, (Meth)acrylsäureester-Polymerisate, Styrol-Acrylsäureester-Copolymerisate, Styrol-1, 3-Butadien-Copolymerisate

3. Massen nach Anspruch 1 bis 2, **dadurch gekennzeichnet, dass** als Polymerisate d) mit Organosiliciumverbindungen und/oder Fettsäure(derivate) hydrophob modifizierte Polymerisate enthalten sind.

4. Massen nach Anspruch 1 bis 3, **dadurch gekennzeichnet, dass** die Polymerisate d) in Form deren wässrigen Dispersionen oder als in Wasser redispergierbares Polymerpulver enthalten sind.

5. Massen nach Anspruch 1 bis 4, **dadurch gekennzeichnet, dass** Kombinationen von Polymerisaten, welche nicht hydrophob modifiziert sind, mit hydrophob modifizierten Polymerisaten enthalten sind.

6. Massen nach Anspruch 1 bis 5, **dadurch gekennzeichnet, dass** < 20 Gew.-% Normalzement DIN EN 197-1, bezogen auf das Gesamttrockengewicht der Massen, enthalten sind.

7. Verwendung der Massen nach Anspruch 1 bis 6 zur Beschichtung von Bauwerken oder als Fugenmörtel oder als Reparaturmörtel oder als Klebemittel.

## Claims

1. Acid-resistant, hydraulically setting compositions based on
a) 20-25% by weight of slag sand,
b) 0.5-30% by weight of one or more pozzolanas,
c) 40-80% by weight of one or more fillers,
d) 0.5 to 10% by weight of one or more polymers based on ethylenically unsaturated monomers,
and also water, based in each case on the total dry weight of the compositions.

2. Compositions according to Claim 1, **characterized in that** one or more polymers from the group consisting of copolymers of vinyl acetate with ethylene, copolymers of vinyl acetate with ethylene and one or more further vinyl esters, copolymers of vinyl acetate with ethylene and (meth)acrylic esters, copolymers of vinyl acetate with ethylene and vinyl chloride, vinyl chloride-ethylene copolymers, (meth)acrylic ester polymers, styrene-acrylic ester copolymers, styrene-1,3-butadiene copolymers are present as polymers d).

3. Compositions according to Claim 1 or 2, **characterized in that** polymers which have been hydrophobically modified by means of organosilicon compounds and/or fatty acid (derivatives) are present as polymers d).

4. Compositions according to any of Claims 1 to 3, **characterized in that** the polymers d) are present in the form of aqueous dispersions thereof or as water-redispersible polymer powder.

5. Compositions according to any of Claims 1 to 4, **characterized in that** combinations of polymers which have not been hydrophobically modified are present together with hydrophobically modified polymers.

6. Compositions according to any of Claims 1 to 5, **characterized in that** < 20% by weight of standard cement DIN EN 197-1, based on the total dry weight of the compositions, is present.

7. Use of the compositions according to any of Claims 1 to 6 for coating building works or as jointing mortar or as repair mortar or as adhesive.

## Revendications

1. Matières à prise hydraulique, résistantes aux acides, à base de
a) 20-25% en poids de sable de haut-fourneau,
b) 0,5-30% en poids d'une ou plusieurs pouzzolanes,
c) 40-80% en poids d'une ou plusieurs charges,
d) 0,5-10% en poids d'un ou plusieurs polymérisats à base de monomères à insaturation éthylénique,
ainsi que d'eau, à chaque fois par rapport au poids sec total des matières.

2. Matières selon la revendication 1, **caractérisées en ce que** sont contenus en tant que polymérisats d) un ou plusieurs polymérisats choisis dans le groupe comprenant des copolymérisats d'acétate de vinyle avec l'éthylène, des copolymérisats d'acétate de vinyle avec l'éthylène et un ou plusieurs autres esters vinyliques, des copolymérisats d'acétate de vinyle avec l'éthylène et des esters d'acide (méth)acrylique, des copolymérisats d'acétate de vinyle avec l'éthylène et le chlorure de vinyle, des copolymérisats chlorure de vinyle/éthylène, des polymérisats d'esters d'acide (méth)acrylique, des copolymérisats styrène/ester d'acide acrylique, des copolymérisats styrène/1,3-butadiène.

3. Matières selon la revendication 1 ou 2, **caractérisées en ce que** sont contenus en tant que polymérisats d) des polymérisats à modification hydrophobe avec des composés organosiliciés et/ou des (dérivés d')acides gras.

4. Matières selon l'une quelconque des revendications 1 à 3, **caractérisées en ce que** les polymérisats d) sont contenus sous forme de leurs dispersions aqueuses ou sous forme de poudre de polymère redispersable dans l'eau.

5. Matières selon l'une quelconque des revendications 1 à 4, **caractérisées en ce que** sont contenues des associations de polymérisats, qui ne sont pas à modification hydrophobe, avec des polymérisats à modification hydrophobe.

6. Matières selon l'une quelconque des revendications 1 à 5, **caractérisées en ce que** sont contenus < 20 % en poids de ciment normal DIN EN 197-1, par rapport au poids sec total des matières.

7. Utilisation des matières selon l'une quelconque des revendications 1 à 6, pour le revêtement d'ouvrages ou en tant que mortier à joints ou en tant que mortier de réparation ou en tant que colle.
